# EUROPÄISCHE PATENTSCHRIFT

(11) **EP 3 348 758 B1**
(45) Veröffentlichungstag und Bekanntmachung des Hinweises auf die Patenterteilung: **20.05.2020**
(21) Anmeldenummer: 17207923.8
(22) Anmeldetag: 18.12.2017
(51) Int. Cl.: E05C 19/04, E05D 5/02, F16B 2/16

(54) **KUGELSCHNÄPPER**
BALL CATCH
LOQUETEAUX À BILLES

(30) Priorität: 13.01.2017 DE 202017100157 U
(43) Veröffentlichungstag der Anmeldung: 18.07.2018
(73) Patentinhaber: Otto Ganter GmbH & Co. KG Normteilefabrik, 78120 Furtwangen (DE)
(72) Erfinder: Pychtin, Alexander, 78112 St. Georgen (DE)
(74) Vertreter: Riebling, Peter

(56) Entgegenhaltungen:
- DE-A1-102004 030 124
- GB-A- 2 158 864
- JP-U- H0 418 179
- US-A- 4 121 319
- US-A1- 2014 361 553

## Beschreibung

Gegenstand der vorliegenden Erfindung ist ein Kugelschnäpper nach dem Oberbegriff des Patentanspruchs 1.

Kugelschnäpper dienen als Arretiervorrichtung zweier zueinander beweglicher Bauteile und sind beispielsweise in der DE 199 11 275 A1 offenbart. Der hier gezeigte Kugelschnäpper besteht aus einem Zentrierteil mit einem daran angeformten Zapfen und einem Schnäppergehäuse, wobei das Schnäppergehäuse den Zapfen umgreift und sich die beiden Bauteile somit gegenseitig arretieren.

Die Bauteile weisen jeweils eine rechteckige, längliche Montageplatte auf, an dessen Endabschnitten durchgehende Bohrungen für Befestigungsschrauben ausgebildet sind.

Diese Bohrungen dienen zur Befestigung der einzelnen Bauteile auf einer Befestigungsebene beispielsweise der Türe und dem Korpus eines Schranks. Das Schnäppergehäuse besteht aus zwei beabstandete und miteinander fluchtende Buchsen, welche auf einer Montageplatte angeformt sind. Der Bereich zwischen den Buchsen dient als Aufnahmeraum, in dem der Zapfen des Zentrierteils eingeführt und arretiert werden kann.

In jeder der Buchsen ist eine Kugel angeordnet, womit insgesamt zwei Kugeln vorhanden sind. Die Kugeln sind in den Buchsen unverlierbar, jedoch axial beweglich angeordnet und reichen teilweise in den Aufnahmeraum hinein. An die Kugeln schließen sich in den Buchsen jeweils eine Druckfeder und eine die Buchse abschließende Einstellschraube an. Die Druckfeder stützt sich somit an der Kugel und an der Einstellschraube ab. Mit der Einstellschraube lässt sich die Druckkraft der Druckfeder auf die Kugel einstellen. Somit kann eine in dem Aufnahmeraum wirksame Arretierkraft für den, in der Aufnahme eingreifenden Zapfen des Zentrierteils verändert werden.

Das Zentrierteil besteht aus der Montageplatte und dem senkrecht an der Montageplatte angeformte Zapfen, welcher im Wesentlichen eine rechteckige Querschnittsfläche aufweist. Am Zapfen ist an seinem von der Montageplatte entfernten Ende, eine Verdickung derart ausgebildet, dass die Verdickung in die Aufnahme der ersten Teilvorrichtung eingeführt werden kann, und dass die Kugeln die Verdickung hintergreifen und in einen daran anschließenden Vorsprung drücken können. Dadurch ist das Zentrierteil an dem Schnäppergehäuse arretiert bzw. umgekehrt.

Generell sind solche Vorrichtungen so ausgerichtet, dass die beiden Montageplatten parallel zueinander verlaufen. Das Zentrierteil und das Schnäppergehäuse sind jedoch so ausgebildet, dass bei der Zusammenführung, die beiden Bauteile auch z.B. in einem rechten Winkel zueinander stehen können.

Mit dem aus dem Stand der Technik bekannten Kugelschnäpper besteht der Nachteil, dass die Einstellschrauben der einzelnen Druckfedern stets von außen zu sehen sind. Zudem fällt beim Lösen der Einstellschraube und Entfernung dieser, die unter Vorspannung stehende Druckfeder samt der Kugel unkontrolliert aus dem Gehäuse.

Die JP H04 18179 U zeigt einen Kugelschnäpper mit einem Schnäppergehäuse, mit zwei darin federbelastet verschiebbar gelagerten Kugelbolzen, welche in zwei gegenüberliegenden Buchsen einer Kugelbolzenführung gelagert sind und gegengleich in einen mittleren Aufnahmeraum zwischen den Kugelbolzenführungen ragen, sowie einen Zentrierteil, das mit einem daran angeformten Zapfen in den Aufnahmeraum einführbar ist und dort durch die Kugeln arretierbar ist, wobei die Kugelbolzenführung als einteilig Bauteil in das Schnäppergehäuse eingesetzt und arretiert ist.

Aufgabe der Erfindung ist es, einen Kugelschnäpper der eingangs genannten Art so weiterzubilden, dass seine Herstellung vereinfacht und seine Handhabung verbessert ist.

Wesentliches Merkmal ist, dass die jeweilige Kugel und die dazugehörige Druckfeder in einer separaten Kugelführung gelagert sind, welche von Richtung der Befestigungsebene von unten in einen Einschub in die Buchsen einführbar sind und von dort die Kugeln aus den Buchsen heraus in den Aufnahmeraum hinein, gegengleich auf den Zapfen der Zentrierzunge wirken.

Der erfindungsgemäße Kugelschnäpper mit den kennzeichnenden Merkmalen des Hauptanspruches hat den Vorteil, dass variablere Verwendungsmöglichkeiten realisierbar sind. So kann die als separates Einsatzteil ausgebildete Kugelführung aus unterschiedlichen Materialen ausgebildet sein, die vom Material des Schnäppergehäuses abweichen. Damit ist eine kostengünstigere Fertigung des Schnäppergehäuses möglich, weil ein wesentlicher Teil des Metallmaterials eingespart werden kann.

Bei einem Verschleiß wird einfach das Einsatzteil ausgetauscht, ohne dass das gesamte Schnäppergehäuse ausgetauscht werden muss.

Wenn die Kugelführung aus einem Kunststoffmaterial gebildet ist, kann der Kunststoff mit reibungserleichternden Zusatzstoffen versehen werden, um eine Langzeit-Schmierung in der Führung für die Lagerung der dort verschiebbar angeordneten Kugel und Feder zu gewährleisten.

Das separate Einsatzteil ist leicht austauschbar und es können verschieden profilierte Kugelführungsbohrungen verwendet werden.

Durch den Austausch einer ersten Kugelführung gegen eine zweite Kugelführung, bei welcher die axiale Länge des Kugelführungskanals verkürzt ist, lässt sich dauerhaft die Federkraft auf einen höheren Druckwert einstellen, ohne dass es einer Einstellschraube bedarf.
Darüber hinaus ist es jedoch nicht ausgeschlossen, dass man in der Kugelführung auch einen Einstellschraube vorsehen kann.

Als weiterer Vorteil ist anzusehen, dass auf einfache Weise die Kugel samt der Druckfeder entnehmbar ist und keine optisch unschönen Schrauben zu sehen sind. Vorteilhafte Ausgestaltungen und Weiterbildungen der Erfindung können den Unteransprüchen entnommen werden.

Im Folgenden wird lediglich eine Kugelführung beschrieben, wobei die Erfindung hierauf nicht beschränkt ist. Bevorzugt werden zwei Kugelführungen für einen Doppelkugelschnäpper verwendet.

Die erfindungsgemäße Kugelführung ist bevorzugt aus Kunststoff ausgebildet, jedoch können andere Materialien wie z.B. ein Metallwerkstoff verwendet werden. Sie weist bevorzugt einen als Durchgangsloch ausgebildeten zylindrischen Kugelführungskanal auf, in dem die Druckfeder und die Kugel aufgenommen sind. Der Kugelführungskanal weist an seiner dem Aufnahmeraum zugewandten Seite eine Verengung auf, wobei sich der Durchmesser des Durchgangslochs verengt. Durch die Verengung, die einen geringeren Durchmesser als die Kugel aufweist, wird eine von der gegenüberliegenden Seite eingeführte Kugel gehalten, sodass nur noch ein Teil der Kugelfläche in den Aufnahmeraum ragt. Die Kugel wird dabei von der Druckfeder gegen die Verengung gedrückt, um einen in den Aufnahmeraum eingeführten Zapfen zu fixieren. An der, der Verengung gegenüberliegenden Seite des offenen zylindrischen Kugelführungskanals, stößt sich die Druckfeder an der geschlossenen Wandung der Buchse, in der die Kugelführung eingeführt wurde, ab.

In einer weiteren Ausgestaltung der Erfindung ist es vorgesehen, dass die Druckfeder an der dem Aufnahmeraum abgewandten Seite des Kugelführungskanals von einer Einstellschraube gehalten wird, wobei es durch diese Einstellschraube möglich ist, die Druckkraft der Druckfeder auf die Kugel durch ein Eindrehen der Schraube in den Aufnahmeraum zu verstellen. Dazu wird die Kugelführung aus der Buchse entnommen, die Feder eingestellt und die Kugelführung wieder in die Buchse eingesetzt.
Die Federvorspannung könnte auch über eine Modifikation des Gehäuses erfolgen und somit wäre eine Einstellschraube nicht zwingend notwendig.
In einer weiteren Ausgestaltung der Erfindung ist es vorgesehen, dass der zylindrische Kugelführungskanal, nur auf der dem Aufnahmeraum zugewandten Seite geöffnet ist und sich die Druckfeder an der dem Aufnahmeraum abgewandten Seite am Boden des Kernlochs abstößt. In diesem Fall besteht die Kugelführung aus Metall und die Verengung wird durch ein Zusammenpressen des zylindrischen Kugelführungskanals erreicht.

Die in die Buchse eingesetzte Kugelführung schließt bündig mit der Unterseite des Flansches ab und liegt somit bei Montage des Schnäppergehäuses auf der Montagefläche auf. Hierauf ist die Erfindung jedoch nicht beschränkt. Die Kugelführung kann auch in die Buchse eingepresst werden und ist durch die somit erzeugte formschlüssige Verbindung in der Buchse fixiert und muss nicht mehr von der Montagefläche abgestützt werden.

Die Kugelführung weist an ihrem Bodenbereich Stege und Nasen auf, welche in aus Aussparungen gebildete Auflageflächen an dem Einschub der Buchse eingreifen und dort eine sichere Lagerung der Kugelführung in der Buchse gewährleisten.

Soweit einzelne Gegenstände als "erfindungswesentlich" oder "wichtig" bezeichnet sind, bedeutet dies nicht, dass diese Gegenstände notwendigerweise den Gegenstand eines unabhängigen Anspruches bilden müssen. Dies wird allein durch die jeweils geltende Fassung des unabhängigen Patentanspruchs bestimmt.

Im Folgenden wird die Erfindung anhand von lediglich einen Ausführungsweg darstellenden Zeichnungen näher erläutert. Hierbei gehen aus den Zeichnungen und ihrer Beschreibung weitere wesentliche Merkmale und Vorteile der Erfindung hervor.

Es zeigen:
- Figur 1:: Schnittdarstellung eines Kugelschnäppers
- Figur 2:: Ansicht der Kugelführung
- Figur 3:: Perspektivische Ansicht Kugelschnäpper im geöffneten Zustand mit einem um 90° gedrehten Zentrierteil
- Figur 4:: Perspektivische Ansicht Kugelschnäpper im geschlossenen Zustand
- Figur 5:: Perspektivische Ansicht des Schnäppergehäuses
- Figur 6:: Schnittdarstellung des Schnäppergehäuses
- Figur 7:: Untersicht des Schnäppergehäuses
- Figur 8:: Perspektivische Ansicht der Kugelführung
- Figur 9:: Schnittdarstellung des Schnäppergehäuses (Bolzenversion mit Einstellmöglichkeit)
- Figur 10:: Schnittdarstellung des Schnäppergehäuses mit Druckstückversion als Bolzenausführung
- Figur 11:: Schnittdarstellung eines Kugelschnäppers

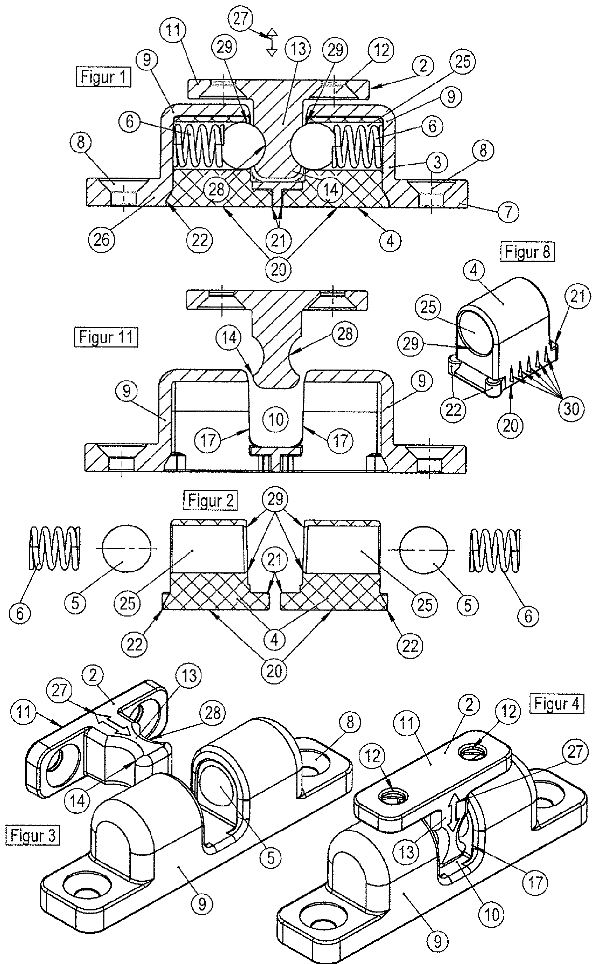

Gemäß den Figuren 1 und 11 zeichnet sich der Kugelschnäpper 1 der vorliegenden Erfindung durch ein Zentrierteil 2 aus, welches aus einer Montageplatte 11 besteht, an der ein Zapfen 13 angeformt ist. Der Zapfen 13 weist an dem, der Montageplatte 11 abgewandten Ende eine Verdickung 14 auf. Diese Verdickung ermöglicht das Eingreifen der Kugel 5, in einer hinter der Verdickung 14 anschließenden Vertiefung 28.
Das Zentrierteil 2 weist zudem an seiner Montageplatte 11 Bohrungen 12 auf, welche dazu dienen das Zentrierteil 2 an einer nicht gezeigten Montagefläche zu befestigen. Das Zentrierteil 2 wird in Pfeilrichtung 27 in das Schnäppergehäuse 26 eingeführt.

Das Schnäppergehäuse 26 wird durch zwei gegenüberliegende Buchsen 9 gebildet, welche jeweils über ein gegenüberliegendes Fenster 17 verfügen. Zudem besitzt das Schnäppergehäuse 26 eine an den Buchsen bzw. den Gehäusewandungen 3 angeformte Montageplatte 7, welche über Bohrungen 8 verfügt. Die Bohrungen 8 dienen zur Montage des Schnäppergehäuses 26 auf einer nicht gezeigten Montagefläche.

In den Buchsen 9 befinden sich die Kugetführungen 4, welche jeweils eine Druckfeder 6 und eine Kugel 5 in einem zylindrischen Kugelführungskanal 25 beinhalten. Die Kugelführungen 4 mit den Kugeln 5 und den Druckfedern 6 sind so in dem Schnäppergehäuse 26 eingeführt, dass die Kugeln 5 mindestens zu einem Viertel aus dem Fenster 17 des Schnäppergehäuses in den Aufnahmeraum 10 des Schnäppergehäuses 26 hineinragen. Jeweils eine Verengung 29 des zylindrischen Kugelführungskanals 25 hindert die einzelne Kugel 5, bedingt durch die in axialer Richtung wirkende Federkraft der Druckfedern 6, in den Aufnahmeraum 10 zu rollen, da die Verengungen 29 einen gegenüber dem Kugelquerschnitt reduzierten Querschnitt aufweisen. Auf diese Weise ragt nur ein Teil des Kugelkörpers in den Aufnahmeraum 10 zwischen den Buchsen 9.

In den Aufnahmeraum 10 des Schnäppergehäuses 26 ist der Zapfen 13 des Zentrierteils 2 in Pfeilrichtung 27 einführbar und durch die in den Aufnahmeraum 10 hineinragenden Kugeln 5, arretierbar.

Der Zapfen 13 kann hier in dieser Ausführung in einem Bereich von 180° in das Schnäppergehäuse 26 eingeführt werden. Es ist jedoch auch vorstellbar, dass man eine Version realisieren kann, die einen kleineren oder größeren Bereich abdeckt.

Wird nun das Zentrierteil 2 gemäß Figur 3 und 4 in Pfeilrichtung 27 in das Schnäppergehäuse 26 eingeführt, werden die Kugeln 5 in axialer Richtung durch die Verdickung 14 verdrängt und rutschen, nachdem die Verdickung die einzelnen Kugeln passiert hat, in die hinter der Verdickung anschließende Vertiefung 28 des Zapfens 13. Somit wird das Zentrierteil 2 im Schnäppergehäuse 26 arretiert.

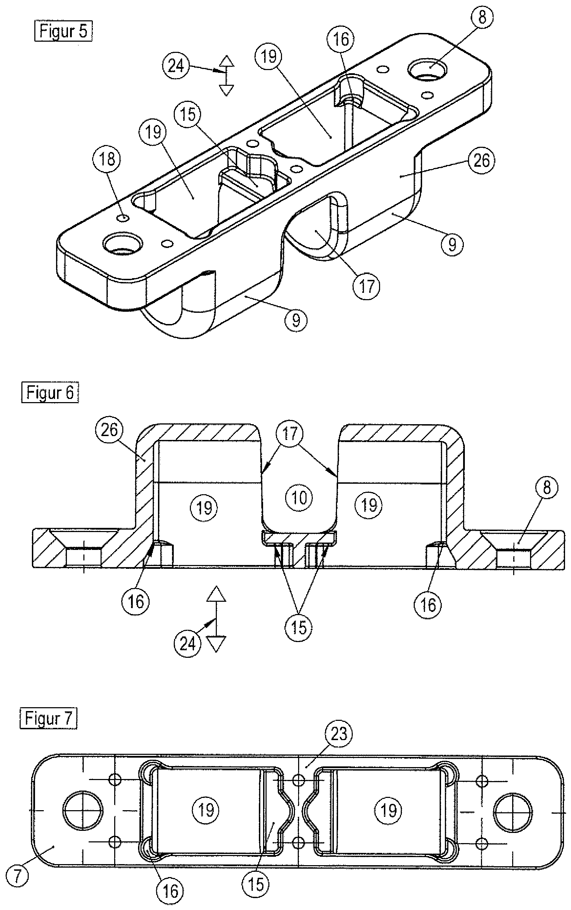

Figur 2 zeigt die erfindungsgemäße Kugelführung 4, welche bevorzugt aus einem Kunststoffkörper besteht, in dem eine Druckfeder 6 und eine Kugel 5 montierbar ist. Die Kugelführung 4 weist zudem an ihrem Bodenbereich 20 mindestens eine Nase 22 und mindestens einen Steg 21 auf. Wird nun die Kugelführung 4 in Pfeilrichtung 24 (nach Figur 5) in das Schnäppergehäuse 26, eingeführt kommt der mindestens eine Steg 21 und die mindestens eine Nase 22 in korrespondierende Auflageflächen 15, 16 im Schnäppergehäuse 26 zur Auflage. In diesem Fall legen sich die mindestens eine Nase 22 auf die Auflagefläche 16 und der mindestens eine Steg 21 auf die Auflagefläche 15. Somit werden die Kugelführungen 4 immer Lagegerecht eingeführt (Poka Yoke).

Die Buchse 9 besitzt den Einschub 19, welcher lediglich nach unten in Richtung der Montagebene geöffnet ist, sowie die jeweils ein Fenster 17 aufweist, welches es ermöglicht, dass die einzelnen Kugeln aus dem Schnäppergehäuse in den Aufnahmeraum 10 ragen können.

Gemäß Figur 3 und Figur 4 besitzt das Schnäppergehäuse 26 keine außenliegende Verschraubung an den Buchsen 9 wie es nach dem Stand der Technik bekannt ist, sodass die Ausseiten der Buchsen 9, bis auf die Fenster 17, durchgängig geschlossen sind. Im Fenster 17 erkennt man die Kugelführung 4 und die aus der Kugelführung 4 in den Aufnahmeraum 10 ragende Kugel 5.

Figur 5 zeigt eine perspektivische Ansicht des Schnäppergehäuses 26 ohne eingesetzte Kugelführungen 4, wobei zu erkennen ist, dass das Schnäppergehäuse 26 eine Auflagefläche 15 zur Auflage des Steges 21 aufweist, sowie Auflageflächen 16, weiche zur Auflage der Nasen 22 der Kugelführung dienen. Zwischen den einzelnen Buchsen 9 ist der Aufnahmeraum 10 zur Aufnahme des Zentrierteils 2 vorhanden. An der Bodenfläche des Schnäppergehäuses sind die Auswerflöcher 18 erkennbar, die im Produktionsprozess zum Auswerfen des Bauteils aus der Maschine dienen.

Figur 6 zeigt eine Schnittdarstellung des Schnäppergehäuses 26 ohne eingebaute Kugelführung. Hierbei ist zu erkennen, wie die Auflageflächen 15 im Mittelbereich 23 des Schnäppergehäuses ausgebildet sind. Dieser Mittelbereich 23 begrenzt gleichzeitig den Aufnahmeraum 10 in Richtung der Montagefläche des Schnäppergehäuses. Die Aufnahmeräume 19 weisen jeweils die sich gegenüberliegendes Fenster 17 auf, die es ermöglichen, dass die in den Kugelführungen 4 gelagerten Kugeln in den Aufnahmeraum 10 ragen können.

In dem Schnäppergehäuse 26 wird demnach in Pfeilrichtung 24 die Kugelführung 4 eingeführt, welche über Nasen, Stege und Einpressrippen an den Aufnahmebereichen der einzelnen Aufnahmeräume 19 sicher gelagert ist.

Figur 7 zeigt die Unteransicht des Schnäppergehäuses 26 und mit dem Flansch 7. Am Anfangsbereich werden die Einschübe 19 von den Auflageflächen 15, 16 flankiert. Die Auflageflächen 15 für die Stege 21 sind durch den Mittelbereich 23 voneinander beabstandet angeordnet. Die Auflageflächen 16 an den äußeren Eckbereichen der Einschübe 19 weisen eine teilkreisförmige Profilierung auf. In den Seitenbereichen des Flansches 7 ist jeweils eine Bohrung 8 zu Befestigung des Schnäppergehäuses auf einer Montagefläche angebracht.

Figur 8 zeigt eine perspektivische Ansicht der Kugelführung 4 mit zwei Nasen 22 und einem Steg 21 welche an der Bodenfläche 20 angeformt sind, sowie den Kugelführungskanal 25. Seitlich an den Kugelführungen 4 befinden sich kleine Einpressrippen 30, mit denen dann die Kugelführungen 4 sicher in dem Schnäppergehäuse 26 gehalten werden. Ebenfalls ist die Verengung 29 zu erkennen.

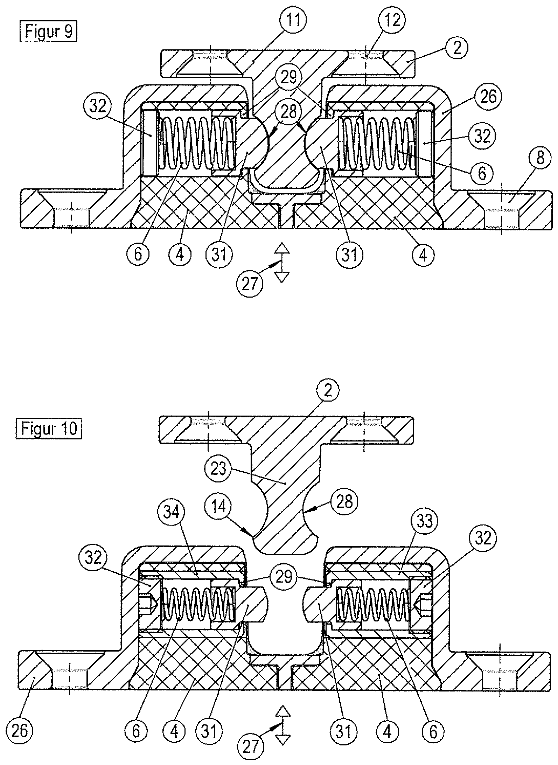

Figur 9 zeigt eine weitere Ausführungsform der Erfindung mit einem Schnäppergehäuse 26 und zwei darin federbelastet Kugelbolzen 31, welche in zwei gegenüberliegenden Buchsen 9 des Schnäppergehäuses 26 gelagert sind und gegengleich in den mittleren Aufnahmeraum 10 zwischen den Buchsen 9 ragen. Auch hier ist die Kugelführung 4 für die Kugelbolzen 31, die Druckfedern 6 und die Einstellschraube 32 im Schnäppergehäuse 26 eingesetzt. In der hier gezeigten Ausführungsform besteht der Kugelbolzen 31 aus einem daran angeformten kugelförmigen Kopfteil mit welchem der Kugelbolzen in den Aufnahmeraum 10 ragt. In der Kugelführung 4 ist die Druckfeder 6 gelagert, welche den Kugelbolzen 31 in Richtung des Aufnahmeraumes 10 drückt.

Figur 10 zeigt eine weitere Ausführungsform der Erfindung mit einem Schnäppergehäuse 26 und zwei darin federbelastet verschiebbar Kugelbolzen 31, welche in zwei gegenüberliegenden Buchsen 9 des Schnäppergehäuses 26 gelagert sind und gegengleich in den mittleren Aufnahmeraum 10 zwischen den Buchsen 9 ragen. Auch hier ist die Kugelführung 4 für die Kugelbolzen 31 und die Druckfedern 6 als separates Teil im Schnäppergehäuse 26 eingesetzt, jedoch ist die Druckfeder 6 und der Kugelbolzen 31 in einer Hülse 33 gelagert, welche ein Außengewinde 34 aufweist, mit dem die Hülse in die Kugelführung 4 einschraubbar ist. An dem Kugelbolzen 31 entgegengesetztem Ende der Hülse 33 ist ein Gewindestift 32 eingeklebt, der die Druckfeder 6 abstützt. Der Gewindestift 32 weist eine Innensechskantaufnahme auf, über die die Hülse 33 mit einem Werkzeug in die Kugelführung (4) eingeschraubt werden kann. In der hier gezeigten Ausführungsform besteht der Kugelbolzen 31 aus einer Hülse 33 und einem daran angeformten kugelförmigen Kopfteil mit welchem der Kugelbolzen in den Aufnahmeraum 10 ragt. In der Hülse 33 ist ein Teil der Druckfeder 6 gelagert, welche den Kugelbolzen 31 in Richtung des Aufnahmeraumes 10 drückt. Darüber hinaus kann man sich auch vorstellen, dass eine Art Systemeinsatz, sprich eine Hülse ohne Außengewinde 34, jedoch mit integrierter Feder 6, Gewindestift 32 und dem Kugelbolzen 31, in die Kugelführung 4 eingesetzt werden könnte.

### Zeichnungslegende

- 1.: Kugelschnäpper
- 2.: Zentrierteil
- 3.: Gehäusewandung
- 4.: Kugelführung
- 5.: Kugel
- 6.: Druckfeder
- 7.: Montageplatte
- 8.: Bohrung
- 9.: Buchse
- 10.: Aufnahmeraum
- 11.: Montageplatte
- 12.: Bohrung
- 13.: Zapfen
- 14.: Verdickung
- 15.: Auflagefläche
- 16.: Auflagefläche
- 17.: Fenster
- 18.: Auswerferloch
- 19.: Einschub
- 20.: Bodenplatte
- 21.: Steg
- 22.: Nase
- 23.: Mittelbereich
- 24.: Pfeilrichtung
- 25.: Kugelführungskanal
- 26.: Schnäppergehäuse
- 27.: Pfeilrichtung
- 28.: Vertiefung
- 29.: Verengung
- 30.: Einpressrippen
- 31.: Kugelbolzen
- 32.: Gewindestift
- 33.: Hülse
- 34: Außengewinde

## Patentansprüche

1. Kugelschnäpper (1) mit einem Schnäppergehäuse (26), mit mindestens zwei darin federbelastet verschiebbar gelagerten Kugeln (5, 31) welche in zwei gegenüberliegenden Buchsen (9) des Schnäppergehäuses (26) gelagert sind und gegengleich in einen mittleren Aufnahmeraum (10) zwischen den Buchsen (9) ragen, sowie einem Zentrierteil (2), das mit einem daran angeformten Zapfen (13) in den Aufnahmeraum (10) einführbar ist und dort durch die Kugeln (5, 31) arretierbar ist, **dadurch gekennzeichnet, dass jeweils eine** Kugelführung (4) für eine Kugel (5, 31) und eine Druckfeder (6) als separates Teil im Schnäppergehäuse (26) eingesetzt ist.

2. Kugelschnäpper (1) nach Anspruch 1, **dadurch gekennzeichnet, dass** die Kugelführung (4) als hülsenförmiges Teil ausgebildet ist, in dem eine annähernd zylindrisch profilierten Bohrung als Kugelführungskanal (25) eingearbeitet ist.

3. Kugelschnäpper (1) nach Anspruch 2, **dadurch gekennzeichnet, dass** an den Hülsenkörper der Kugelführung (4) eine Bodenplatte (20) angeformt ist.

4. Kugelschnäpper (1) nach einem der Ansprüche 1 bis 3, **dadurch gekennzeichnet, dass** die Kugelführung (4) von Seiten der Befestigungsebene des Schnäppergehäuses (26) in einen zur Befestigungsebene hin offenen Einschub (19) des Schnäppergehäuses (26) einführbar ist.

5. Kugelschnäpper nach einem der Ansprüche 1 bis 4, **dadurch gekennzeichnet, dass** die Kugelführung (4) ein zylindrischen Kugelführungskanal (25) für die Aufnahme der Druckfeder (6) und der Kugel (5, 31) aufweist, welche an ihrem dem Aufnahmeraum (10) zugewandten Ende eine Verengung (29) aufweist, welche einen geringeren Durchmesser als die Kugel besitzt und die Kugel nur teilweise in den Aufnahmeraum hinein ragen lässt.

6. Kugelschnäpper nach Anspruch 4 oder 5, **dadurch gekennzeichnet, dass** die Kugelführung (4) an ihrem Bodenbereich (20) mindestens einen am Schnäppergehäuse (26) sich zentrierenden Steg (21) und mindestens eine Nase (22) aufweist, welche auf korrespondierenden Auflageflächen (15, 16) im Einschub (19) der Buchse (9) am Schnäppergehäuse (26) aufliegen.

7. Kugelschnäpper nach einem der Ansprüche 4 bis 6, **dadurch gekennzeichnet, dass** die Kugelführung (4) in den Einschub (19) der Buchse (9) einpressbar ist.

8. Kugelschnäpper nach einem der Ansprüche 1 bis 7, **dadurch gekennzeichnet, dass** seitlich an der Kugelführung (4) kleine Einpressrippen (30), zur seitlichen Abstützung der Kugelführung (4) im Schnäppergehäuse (26), angeformt sind.

9. Kugelschnäpper nach einem der Ansprüche 1 bis 8, **dadurch gekennzeichnet, dass** die Kugelführung (4) aus Kunststoff besteht.

10. Kugelschnäpper nach einem der Ansprüche 1 bis 9, **dadurch gekennzeichnet, dass** die Kugelführung (4) aus Metall besteht.

## Claims

1. Ball catch (1) having a catch housing (26) with at least two balls (5, 31) mounted therein to be displaceable in spring-loaded manner and which are mounted in two opposite sockets (9) of the catch housing (26) and project in a diametrically opposed manner into a central receiving space (10) between the sockets (9), and a centring part (2) which with a journal (13) integrally formed thereon can be introduced into the receiving space (10) and can be locked there by the balls (5, 31), **characterised in that** respectively a ball guide (4) for a ball (5, 31) and a compression spring (6) is inserted in the catch housing (26) as a separate part.

2. Ball catch (1) according to claim 1, **characterised in that** the ball guide (4) is designed as a sleeve-shaped part in which an approximately cylindrically profiled borehole is incorporated as a ball guide channel (25).

3. Ball catch (1) according to claim 2, **characterised in that** a base plate (20) is integrally formed on the sleeve body of the ball guide (4).

4. Ball catch (1) according to one of claims 1 to 3, **characterised in that** the ball guide (4) can be introduced from the sides of the attachment plane of the catch housing (26) into a slot (19) of the catch housing (26) which is open towards the attachment plane.

5. Ball catch according to one of claims 1 to 4, **characterised in that** the ball guide (4) has a cylindrical ball guide channel (25) for receiving the compression spring (6) and the ball (5, 31), and on its end facing the receiving space (10) has a narrowing (29) which has a smaller diameter than the ball and allows the ball to project only partly into the receiving space.

6. Ball catch according to claim 4 or 5, **characterised in that** the ball guide (4) on its base region (20) has at least one bar (21) being centred on the catch housing (26) and at least one projection (22) which rest on corresponding support surfaces (15, 16) in the slot (19) of the socket (9) on the catch housing (26).

7. Ball catch according to one of claims 4 to 6, **characterised in that** the ball guide (4) can be pressed into the slot (19) of the socket (9).

8. Ball catch according to one of claims 1 to 7, **characterised in that** the small press-in ribs (30) for laterally supporting the ball guide (4) in the catch housing (26) are integrally formed laterally on the ball guide (4).

9. Ball catch according to one of claims 1 to 8, **characterised in that** the ball guide (4) consists of plastic.

10. Ball catch according to one of claims 1 to 9, **characterised in that** the ball guide (4) consists of metal.

## Revendications

1. Loqueteau à billes (1) avec un boîtier de loqueteau (26), avec au moins deux billes (5, 31) montées mobiles dans celui-ci, contraintes par ressort, qui sont montées dans deux douilles (9) du boîtier de loqueteau (26) situées face à face et qui dépassent en sens inverse dans un logement central (10) entre les douilles (9), et avec une pièce de centrage (2) qui est apte à être introduite, avec une tige (13) rapportée sur elle, dans le logement (10) et à être arrêtée dans celui-ci par les billes (5, 31), **caractérisé en ce qu'un** guidage de billes (4) pour une bille (5, 31) et un ressort de compression (6) est utilisé respectivement comme pièce séparée dans le boîtier de loqueteau (26).

2. Loqueteau à billes (1) selon la revendication 1, **caractérisé en ce que** le guidage de billes (4) est formé comme une pièce en forme de manchon dans laquelle un perçage à profil approximativement cylindrique est réalisé comme conduit de guidage de billes (25).

3. Loqueteau à billes (1) selon la revendication 2, **caractérisé en ce qu'une** plaque de fond (20) est rapportée sur le corps de manchon du guidage de billes (4).

4. Loqueteau à billes (1) selon l'une des revendications 1 à 3, **caractérisé en ce que** le guidage de billes (4) est apte à être introduit par des côtés du plan de fixation du boîtier de loqueteau (26) dans une partie d'enfichage (19) ouverte en direction du plan de fixation.

5. Loqueteau à billes selon l'une des revendications 1 à 4, **caractérisé en ce que** le guidage de billes (4) présente un conduit de guidage de billes cylindrique (25) pour loger le ressort de compression (6) et la bille (5, 31), qui présente à son extrémité tournée vers le logement (10) un rétrécissement (29) qui a un diamètre plus faible que la bille et ne laisse dépasser la bille que partiellement dans le logement.

6. Loqueteau à billes selon la revendication 4 ou 5, **caractérisé en ce que** le guidage de billes (4) présente sur sa zone de fond (20) au moins une patte (21) se centrant sur le boîtier de loqueteau (26) et au moins un talon (22) qui sont posés sur des surfaces d'appui correspondantes (15, 16) dans la partie d'enfichage (19) du manchon (9) sur le boîtier de loqueteau (26).

7. Loqueteau à billes selon l'une des revendications 4 à 6, **caractérisé en ce que** le guidage de billes (4) est apte à être enfoncé dans la partie d'enfichage (19) du manchon (9).

8. Loqueteau à billes selon l'une des revendications 1 à 7, **caractérisé en ce que** latéralement sur le guidage de billes (4) sont rapportées de petites nervures d'enfoncement (30) pour l'appui latéral du guidage de billes (4) dans le boîtier de loqueteau (26).

9. Loqueteau à billes selon l'une des revendications 1 à 8, **caractérisé en ce que** le guidage de billes (4) est en matière plastique.

10. Loqueteau à billes selon l'une des revendications 1 à 9, **caractérisé en ce que** le guidage de billes (4) est en métal.
